# FASCICULE DE BREVET EUROPEEN

(11) **EP 3 111 815 B1**
(45) Date de publication et mention de la délivrance du brevet: **02.05.2018**
(21) Numéro de dépôt: 16177448.4
(22) Date de dépôt: 01.07.2016
(51) Int. Cl.: A47J 43/07

(54) **MÉLANGEUR POUR ALIMENTS**
MIXER FÜR LEBENSMITTEL
FOOD MIXER

(30) Priorité: 03.07.2015 FR 1556311
(43) Date de publication de la demande: 04.01.2017
(73) Titulaire: SANTOS, 69120 Vaulx en Velin (FR)
(72) Inventeur: VERBEKE, Benoit, 69440 MORNANT (FR); FOUQUET, Nicolas, 69680 CHASSIEU (FR)
(74) Mandataire: Lavoix

(56) Documents cités:
- EP-A1- 2 522 262
- WO-A1-03/077722
- WO-A1-2013/016533
- CN-U- 201 578 095
- US-A1- 2009 260 236

## Description

La présente invention concerne un mélangeur d'aliments, c'est-à-dire un appareil servant à mélanger des aliments liquides et/ou solides, à les liquéfier et/ou à les réduire en purée. L'invention s'applique en particulier au cas où le mélangeur est un blender, mais elle est également applicable à d'autres types de mélangeur, tels que les bols-mixeurs, les mixeurs-plongeants qui sont autrement appelés batteurs portatifs, et les cutters qui sont autrement appelés préparateurs culinaires.

Un blender comprend classiquement un bol dans lequel des aliments sont reçus pour y être traités. Aux fins de ce traitement, une lame est prévue dans le bol, en étant généralement portée par la paroi de fond du bol : cette lame est entraînée, par des moyens motorisés ad hoc, en rotation sur elle-même. Dans la pratique, la lame se décline en de multiples géométries, avec divers aménagements de forme, comme cela est par exemple proposé dans WO-A-2005/072110. Ces diverses formes de lame induisent, de manière plus ou moins marquée, des effets différents sur la formation et l'évolution des écoulements de mélange des aliments dans le bol, résultant de la mise en rotation de la lame. Dans tous les cas, la lame présente, sur une ou chaque aile latérale de celle-ci, un bord d'attaque qui, lorsque la lame est entraînée en rotation, interfère directement avec les aliments contenus dans le bol, en entrant en contact avec eux en premier, comparativement au reste de l'aile, de manière à diviser ces aliments et à ainsi les liquéfier et/ou les réduire en purée. En pratique, ce bord d'attaque inclut généralement au moins une arête tranchante de manière à couper les aliments et ainsi les subdiviser par découpage.

Cependant, pour une conformation donnée du bord d'attaque, son action sur les aliments contenus dans le bol n'est pas toujours appropriée ou réellement efficace en fonction de la nature des aliments à traiter, notamment en fonction de leur densité, de leur consistance, etc. Dans ce contexte, WO 03/077722, qui peut être considéré comme l'état de la technique le plus proche de la présente invention, a proposé de pouvoir entrainer une lame d'un mélangeur en rotation dans les deux sens, tout en prévoyant des conformations différentes pour, respectivement, le bord d'attaque et le bord de fuite de chaque aile de la lame. Ainsi, selon un mode de réalisation envisagé dans WO 03/077722, le bord d'attaque est tranchant, afin de couper les aliments lorsque la lame est entrainée dans un sens de rotation, tandis que le bord de fuite est plat, afin de pétrir les aliments lorsque la lame est entrainée en sens opposé. Selon un autre mode de réalisation envisagé dans WO 03/077722, le bord d'attaque et le bord de fuite sont chacun prévus tranchants, mais avec des géométries de coupe respectives qui sont différentes l'une de l'autre afin que l'action de découpage des aliments ne soit pas la même selon le sens d'entrainement de la lame, mais sous réserve que la vitesse d'entrainement de la lame soit adaptée à chaque sens de rotation de façon à obtenir un effet de coupe efficace pour la géométrie du tranchant concerné.

Cela étant dit, la solution proposée dans WO 03/077722 n'est pas pertinente lorsque les aliments introduits dans le bol sont des aliments congelés, tels que des fruits congelés ou des morceaux de fruit congelés ou des glaçons : l'application d'un bord tranchant- s'avère peu efficace en vue de diviser de tels aliments durs et peut conduire à un disfonctionnement voire à un endommagement du blender, résultant d'un blocage dur de la lame contre les aliments congelés, eux-mêmes bloqués contre la face intérieure du bol. L'utilisateur est typiquement contraint d'arrêter totalement le blender et de fragmenter les aliments avec un pilon ou d'autres moyens de fortune, le cas échéant directement à l'intérieur du bol avec le risque réel de l'endommager ou de tordre la lame, avant de pouvoir ré-entraîner la lame en rotation, sous réserve que le blender ne soit pas hors service. Même dans le cas de figure où la lame ne se bloque pas, son action sur les aliments précités est si peu efficace que la lame doit être maintenue entraînée en rotation pendant une durée particulièrement longue, sauf à surdimensionner considérablement la puissance d'entraînement de la lame, ce qui, dans les deux cas, ne respecte pas des considérations de préservation de l'environnement.

De son côté, EP 2 522 262 divulgue un mélangeur comprenant six lames réparties en trois paires. Certaines lames ont un bord d'attaque tranchant lisse, tandis que les autres lames ont un bord d'attaque dentelé, c'est-à-dire incluant des indentations en creux qui peuvent fragmenter des aliments durs, tels que des glaçons, en agissant sur eux par broyage.

Quand à US 2009/0260236, il divulgue lui aussi un mélangeur à six lames dont certaines ont un bord d'attaque tranchant lisse, tandis que les autres lames ont un bord d'attaque, qui est ondulé à la façon d'un « S » et qui est pourvu d'une multitude de petites striures irrégulières : chacun de ces bords d'attaque ondulés et striés peut fragmenter des aliments durs, tels que des morceaux congelés, en agissant sur eux par fendage et ébréchage.

Le but de la présente invention est de remédier aux inconvénients décrits ci-dessus, en proposant un blender et, plus généralement, un mélangeur à même de traiter, de manière simple, sûre, efficace et économe en énergie, des aliments de diverses natures, y compris des aliments durs tels que des glaçon ou des morceaux de fruits ou légumes congelés.

A cet effet, l'invention a pour objet un mélangeur pour aliments, tel que défini à la revendication 1.

Grâce à l'invention, le bord de fuite de la ou chaque aile de la lame est mis à profit pour, de manière similaire au bord d'attaque, interférer directement avec les aliments contenus dans un récipient afin de les diviser. Pour ce faire, la lame du mélangeur conforme à l'invention est prévue pour être entraînée en rotation sur elle-même dans le sens opposé à celui dans lequel elle est entraînée pour que le bord d'attaque de sa ou ses ailes entre en premier en contact avec les aliments dans le récipient : ainsi, le mélangeur conforme à l'invention permet, sélectivement, d'entraîner la lame dans un premier sens de rotation, dit sens principal, pour lequel c'est le bord d'attaque de la ou chaque aile qui interagit avec les aliments pour les couper par son biseau de coupe, et d'entraîner la lame dans le sens, dit secondaire, opposé au sens principal, pour lequel c'est le bord de fuite de la ou chaque aile qui interagit avec les aliments pour les fragmenter par sa ou ses dents de fragmentation. Selon l'invention, le bord de fuite de la ou chaque aile présente donc une conformation dédiée de fragmentation des aliments, réalisée sous la forme de sa ou ses dents saillantes, conçues pour interagir avec les aliments à la façon d'un pic à glace : par choc mécanique, cette ou ces dents de fragmentation brisent des aliments durs, tels que des glaçons ou des morceaux de fruits ou légumes congelés, vis-à-vis desquels le biseau du bord d'attaque n'aurait qu'une action de division limitée, voire quasi nulle. En pratique, la forme de réalisation du ou des dents de fragmentation n'est pas limitative de l'invention du moment que chacune de ces dents de fragmentation présente un sommet pointu permettant de briser des aliments durs de la même façon que le ferait un « mini » pic à glace. De même, la forme de réalisation du biseau de coupe du bord d'attaque n'est pas limitative. Dans tous les cas, dès lors que l'action du bord d'attaque sur les aliments n'est pas satisfaisante notamment du fait de la dureté intrinsèque des aliments à traiter par le mélangeur, l'inversion du sens de rotation de la lame permet d'agir sur ces aliments, par le bord de fuite, d'une manière plus satisfaisante, étant remarqué que la présence des dents de fragmentation ne réduit pas les performances de coupe du biseau lorsque la lame est entrainée en rotation dans le sens principal, de même que, inversement, la présence du biseau de coupe n'altère pas les performances de fragmentation des dents lorsque la lame est entrainée en rotation dans le sens secondaire. Pour aboutir à un même résultat de mélange, le mélangeur conforme à l'invention s'avère ainsi plus respectueux de l'environnement que des solutions de l'art antérieur, reposant soit sur un surdimensionnement de la puissance d'entraînement de la lame, soit sur un allongement substantiel de la durée d'entraînement de la lame, soit sur l'utilisation successive de plusieurs mélangeurs différents dont les actions des lames respectives ne sont pas les mêmes. En d'autres termes, à performance de mélange identique, le mélangeur conforme à l'invention dissipe moins d'énergie que les solutions antérieures.

L'invention s'avère particulièrement pratique et appréciable pour un blender, autrement appelé bol-mixeur, dont le bol contient les aliments à mélanger. Ceci étant le mélangeur conforme à l'invention peut également se décliner en un batteur portatif, un robot-mixeur, un cutter, etc.

Des caractéristiques additionnelles avantageuses du mélangeur conforme à l'invention sont spécifiées aux revendications dépendantes.

L'invention sera mieux comprise à la lecture de la description qui va suivre, donnée uniquement à titre d'exemple et faite en se référant aux dessins sur lesquels :
- la figure 1 est une vue en perspective d'un blender conforme à l'invention ;
- la figure 2 est une vue en élévation d'un bol du blender de la figure 1, montrant l'intérieur de ce bol ;
- la figure 3 est une vue en perspective d'une lame appartenant au blender de la figure 1, visible sur la figure 2 ;
- les figures 4 et 5 sont des vues en élévation selon respectivement la flèche IV de la figure 3 et la flèche V de la figure 4 ;
- la figure 6 est une vue à plus grande échelle du détail cerclé VI sur la figure 4 ;
- la figure 7 est une vue en perspective d'un batteur portatif conforme à l'invention ;
- la figure 8 est une coupe schématique dans le plan VIII de la figure 7 ;
- la figure 9 est une vue en perspective d'une variante de lame ; et
- la figure 10 est une vue en élévation selon la flèche X de la figure 9.

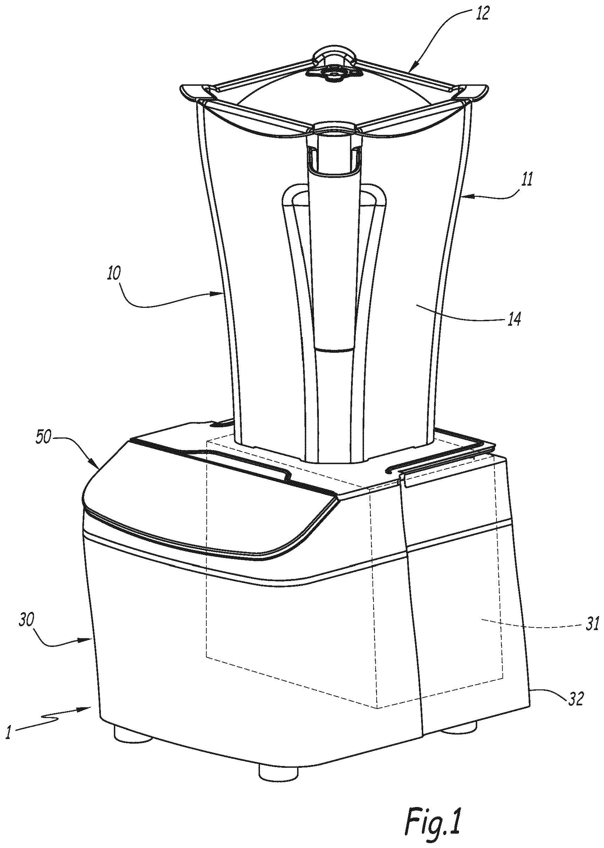

Sur la figure 1 est représenté un blender 1, qui peut également être qualifié de mixeur ou encore de bol-mixeur.

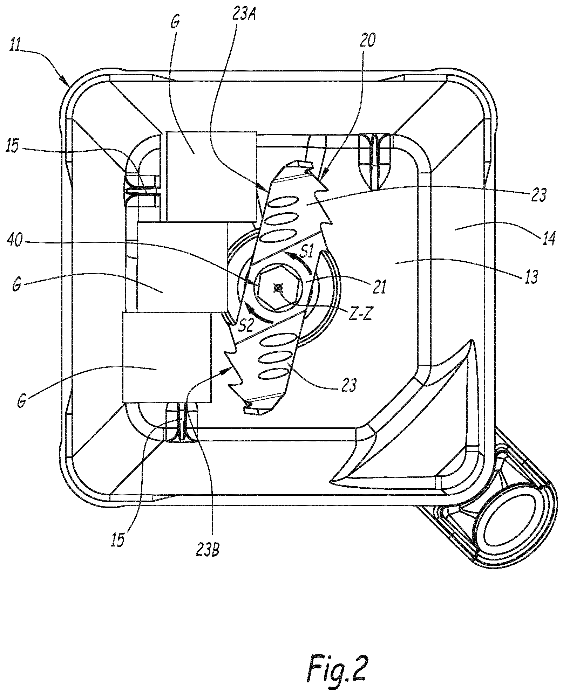

Le blender 1 comprend un bol 10, visible sur les figures 1 et 2. Dans l'exemple de réalisation considéré sur les figures, ce bol 10 comporte deux composants principaux, à savoir, d'une part, un récipient 11 à même de contenir des aliments, non représentés sur les figures, destinés à être traités dans le bol, notamment en les mélangeant, les liquéfiant et/ou les réduisant en purée, et, d'autre part, un couvercle amovible 12 de fermeture du récipient 11.

Le récipient 11 définit ainsi un volume libre V dans lequel les aliments à traiter sont contenus. Ce volume libre V est délimité par, à la fois, une paroi de fond 13 du récipient 11 et une paroi latérale 14 de ce récipient, la paroi latérale 14 s'étendant transversalement depuis la périphérie extérieure de la paroi de fond 13, comme bien visible sur les figures 1 et 2. Dans l'exemple de réalisation considéré ici, la paroi latérale 14 s'étend depuis la paroi de fond 13 suivant une direction proche de la perpendiculaire au plan géométrique dans lequel la paroi de fond 13 est globalement inscrite. Plus précisément, la direction et le plan géométrique précités forment entre eux un angle obtus, légèrement supérieur à 90°, de sorte que, en s'éloignant de la paroi de fond 13, la paroi latérale 14 s'évase légèrement. On notera que la paroi latérale 14 présente une section transversale à contour fermé, comme bien visible sur la figure 2 : ainsi, le récipient 11 peut être décrit comme présentant globalement une forme tubulaire, la paroi latérale 14 formant le corps principal tubulaire correspondant tandis que la paroi de fond 13 ferme une des deux extrémités axiales de ce corps, l'extrémité opposée étant fermée, de manière amovible, par le couvercle 12.

Par commodité, la suite de la description est orientée en considérant que le plan géométrique, dans lequel la paroi de fond 13 est globalement inscrite, est horizontal, avec la face de la paroi de fond 13, délimitant le volume libre V, tournée vers le haut. Ainsi, les termes « supérieur » et « haut » désignent une direction orientée vers le haut par rapport au plan géométrique précité, ce qui correspond à une direction tournée vers la partie haute sur la figure 1 et tournée vers le lecteur sur la figure 2. Les termes « inférieur » et « bas » désignent une direction de sens opposé. En pratique, l'orientation qui vient d'être définie revient à décrire le bol 10 alors que celui-ci repose, directement ou indirectement, sur une surface plane horizontale, de type plan de travail, avec le volume libre V ouvert vers le haut vis-à-vis de cette surface.

La forme de réalisation de la paroi de fond 13 et de la paroi latérale 14 du récipient 11 n'est pas limitative de l'invention. Ainsi, à titre d'exemple, la paroi de fond 13 peut ne pas être rigoureusement plane, mais être légèrement bombée vers le bas, la face supérieure de cette paroi de fond étant alors concave, avec sa zone la plus basse située dans la région centrale de la paroi de fond 13. De même, plutôt que la paroi latérale 14 présente un contour transversal de forme carrée, en étant arrondi aux angles, comme sur la figure 2, le contour précité peut, en variante non représentée, être pentagonal, en particulier comme décrit en détail dans FR 2 986 956, ou bien être cylindrique, qui est une forme couramment utilisée dans les appareils de préparation culinaire. Quelle que soit la forme de réalisation de sa paroi de fond 13 et de sa paroi latérale 14, le récipient 11 du bol 10 est conçu, notamment dimensionné, pour recevoir et traiter les aliments soumis à l'action du blender 1.

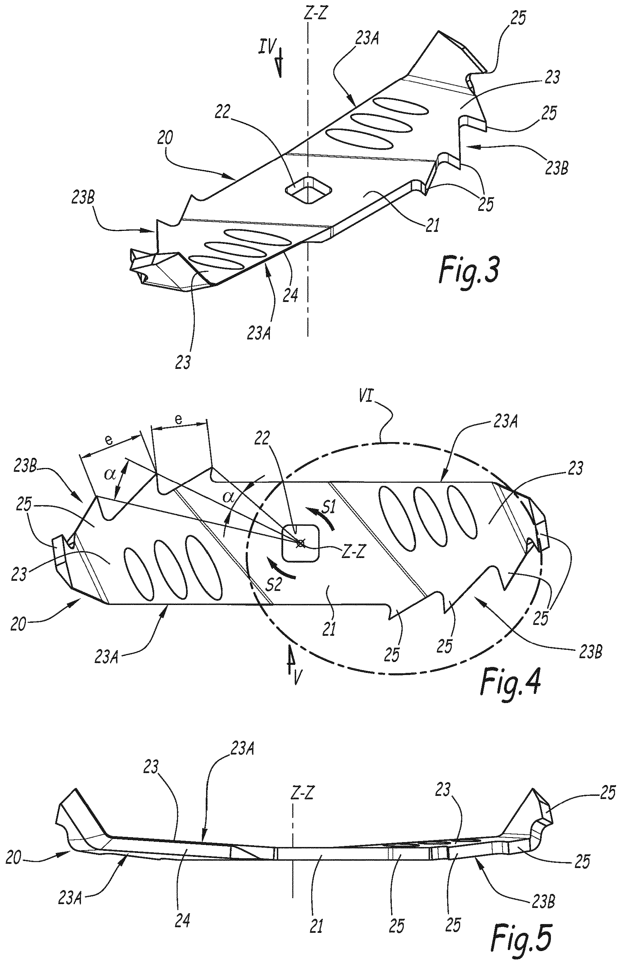

Le blender 1 comprend également une lame 20 qui, à l'intérieur du récipient 11 du bol 10, est montée rotative, autour d'un axe vertical Z-Z sur la paroi de fond 13 du récipient, cette paroi de fond formant ainsi un support fixe pour la lame rotative 20. Cette lame 20, qui est visible sur la figure 2 et qui est représentée seule sur les figures 3 à 6, est agencée dans le volume libre V du récipient 11, en particulier dans la partie basse de ce volume libre V, en surplombant la paroi de fond 13.

Afin d'entraîner la lame 20 en rotation sur elle-même autour de l'axe Z-Z, le blender 1 comprend un moteur 31, en particulier un moteur électrique, ou, plus généralement, des moyens motorisés. Ce moteur 31 est intégré dans un socle 30 montré uniquement sur la figure 1. De manière connue en soi et non détaillée sur les figures, le moteur 31 est agencé dans un carter 32 du socle 30, sur une paroi supérieure duquel le récipient 11 est conçu pour prendre appui vers le bas, comme montré sur la figure 1. Lorsque le bol 10 repose ainsi sur le socle 30, la sortie motrice du moteur 31 est accouplée en rotation autour de l'axe Z-Z à la lame 20, par l'intermédiaire d'un mécanisme de transmission 40, partiellement visible sur la figure 2. Ce mécanisme de transmission 40 est porté par la lame 20 et traverse verticalement la paroi de fond 13 de manière étanche. Bien entendu, la forme de réalisation de ce mécanisme de transmission 40, ainsi que celle de la sortie motrice du moteur 31 ne sont pas limitatives de l'invention du moment que, lorsque ce mécanisme de transmission et cette sortie motrice sont accouplés, la lame 20 est rotative autour de l'axe Z-Z sous l'action d'entraînement de la sortie du moteur 31.

Comme bien visible sur les figures 3 à 6, la lame 20 inclut un corps 21, qui est traversé par l'axe Z-Z et qui est en prise mécanique avec le mécanisme de transmission 40. Dans l'exemple de réalisation considéré ici, le corps 21 est constitué d'une plaquette sensiblement plane, disposée perpendiculairement à l'axe Z-Z. De plus, cette plaquette est pourvue d'un trou traversant 22, centré sur l'axe Z-Z et reliant l'une à l'autre les faces supérieure et inférieure du corps 21 : ce trou 22 reçoit et coopère avec une partie complémentaire du mécanisme de transmission 40 afin d'assurer la liaison en rotation, autour de l'axe Z-Z, entre la lame 20 et cette partie du mécanisme de transmission 40.

La lame 20 inclut également deux ailes 23 qui s'étendent de part et d'autre du corps 21. Dans l'exemple de réalisation considéré ici, les ailes 23 sont symétriques l'une de l'autre par rapport à l'axe Z-Z.

Chaque aile 23 s'étend depuis le corps 21 suivant une direction transversale à l'axe Z-Z. Dans l'exemple considéré ici, chaque aile 23 est constituée d'une plaquette, qui s'étend globalement dans le prolongement de la plaquette du corps 21, tout en étant légèrement vrillée par rapport au corps 21, comme montré sur la figure 5. A son extrémité libre, c'est-à-dire à son extrémité opposée au corps 21, la plaquette de chaque aile 23 est pliée vers le haut. De plus, comme bien visible sur les figures 3 et 4, la face supérieure de la plaquette de chaque aile est pourvue de dépressions à profil oblong. On notera que les divers aménagements qui viennent d'être décrits pour les ailes 23, relatifs au fait que ces ailes sont vrillées, ont leur extrémité libre pliée et présentent des dépressions en face supérieure, visent à influer sur la formation et l'évolution des écoulements de mélange des aliments traités par le blender 1 dans le bol 10 : ces aménagements ne sont pas limitatifs de l'invention, dans le sens où ils sont optionnels, des aménagements alternatifs ou complémentaires, connus en soi, pouvant d'ailleurs être prévus pour les ailes 23 de la lame 20.

Quelle que soit sa forme de réalisation, chaque aile 23 présente deux bords opposés suivant une direction périphérique à l'axe Z-Z, à savoir un bord d'attaque 23A et un bord de fuite 23B. Lorsque la lame 20 est entraînée en rotation autour de l'axe Z-Z dans un sens principal, noté S1 sur les figures, le bord d'attaque 23A de chaque aile 23 constitue l'avant de l'aile et est donc prévu pour entrer en contact avec des aliments, présents dans le volume libre V du bol 10 et disposés sur la trajectoire de l'aile, en premier comparativement au reste de l'aile. Toujours en considérant le sens de rotation S1, le bord de fuite 23B de chaque aile 23 constitue l'arrière de l'aile.

Afin de diviser les aliments disposés sur la trajectoire des ailes 23 lorsque la lame 20 est entraînée en rotation autour de l'axe Z-Z dans le sens principal S1, le bord d'attaque 23A de chaque aile 23 est pourvu d'un biseau 24 de coupe des aliments, comme bien visible sur la partie gauche des figures 3 et 5. Dans l'exemple de réalisation considéré, le biseau 24 est à simple face, dans le sens où il est délimité en totalité par la face inférieure de la plaquette constituant l'aile correspondante 23, dans sa zone de jonction avec la face supérieure de cette plaquette. A titre de variantes non représentées, ce biseau présente des conformations différentes, le cas échéant plus sophistiquées : à titre d'exemple, ce biseau peut ainsi être à double face, en étant délimité, pour partie, par la face inférieure et, pour l'autre partie, par la face supérieure de la plaquette précitée. Par ailleurs, on notera que l'arête sommitale du biseau 24 peut aussi bien être prévue tranchante qu'émoussée, la coupe des aliments réalisée par le biseau 24 étant ainsi plus ou moins nette. Plus généralement, on comprend que le biseau 24 dont est pourvu le bord d'attaque 23 est conformé pour couper les aliments lorsque la lame 20 est entraînée en rotation autour de l'axe Z-Z dans le sens principal S1.

Le bord de fuite 23B de chaque aile 23 n'est pas réalisé sous forme d'un dos plat, délimité par la tranche arrière de la plaquette constituant l'aile correspondante. En effet, comme bien visible sur les figures 3 à 6, ce bord de fuite 23B est pourvu de plusieurs dents 25 qui sont chacune en saillie du reste du bord de fuite 23B, tout en s'étendant globalement dans le prolongement de l'aile 23, en particulier sans former de protubérance vis-à-vis des faces supérieure et inférieure de la plaquette formant cette aile. Dans l'exemple considéré ici, ces dents 25 sont au nombre de quatre.

Les dents 25 permettent de fragmenter des aliments durs, notamment difficiles à couper, tels que des glaçons ou des morceaux de fruits et légumes congelés, chacune de ces dents agissant, en quelque sorte, comme un « mini » pic à glace. Cependant, les dents 25 n'agissent pas ainsi sur de tels aliments pour les fragmenter lorsque la lame 20 est entraînée en rotation dans le sens principal S1 car, avec ce sens de rotation S1, elles sont à l'arrière de l'aile correspondante 23, les aliments passant alors, au niveau des dents 25, soit au-dessus, soit au-dessous d'elles, sans interférer avec ces dents 25. En revanche, l'interaction entre les dents 25 et des aliments de manière à fragmenter ces derniers intervient lorsque la lame 20 est entraînée en rotation autour de l'axe Z-Z dans un sens opposé au sens principal S1, autrement dit dans le sens secondaire noté S2 sur les figures. En transposant au bord de fuite 23B de chaque aile 23 les considérations développées plus haut pour le bord d'attaque 23A de l'aile en lien avec le sens de rotation principal S1, on comprend que les dents 25 du bord de fuite 23B sont conformées pour fragmenter les aliments, contenus dans le récipient 11 du bol 10 et disposés sur la trajectoire de l'aile correspondante 23 lorsque la lame 20 est entraînée en rotation autour de l'axe Z-Z dans le sens secondaire S2.

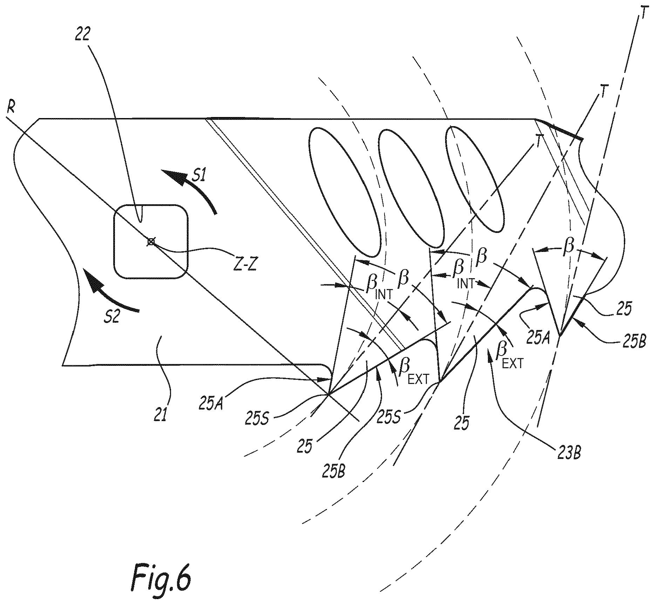

Comme montré dans l'exemple de réalisation considéré sur les figures 3 à 6, chacune des dents 25 présente un sommet pointu 25S qui, comme bien visible sur la figure 6, est défini à la jonction anguleuse entre un bord intérieur 25A de la dent, qui est tourné vers l'axe Z-Z, et un bord extérieur 25B, qui est tourné à l'opposé de l'axe Z-Z. Les bords intérieur 25A et extérieur 25B de chaque dent 25 sont avantageusement disposés de part et d'autre d'une droite géométrique T correspondant à la tangente, au niveau du sommet 25S de la dent concernée, au cercle géométrique, dessiné en pointillés sur la figure 6, qui est centré sur l'axe Z-Z et qui passe par ce sommet 25S : en prévoyant que ces bords intérieur 25A et extérieur 25B soient tous les deux agencés en arrière, par rapport au sens secondaire S2, d'un rayon R passant par l'axe Z-Z et le sommet concerné 25S, l'effet de pic à glace produit par la dent 25 est renforcé. En effet, cela revient à dire que l'angle β_{INT}, qui est formé entre le bord intérieur 25A et la droite T, est strictement inférieur à 90°, tandis que l'angle β_{EXT}, qui est formé entre le bord extérieur 25B et la droite T, est lui aussi strictement inférieur à 90°, ce qui fait que la pointe formée au sommet 25S de la dent 25 tend à frapper les aliments se trouvant sur la trajectoire circulaire de la lame 10 lorsque celle-ci est entraînée dans le sens secondaire S2, avant que ces aliments ne soient frappés par le reste du bord de fuite 23B.

Suivant un dimensionnement préférentiel, qui est mis en oeuvre dans l'exemple considéré ici et qui est bien visible sur la figure 6, l'angle β de chaque sommet 25S, c'est-à-dire l'angle formé entre les bords intérieur 25A et extérieur 25B de chaque dent 25 et qui correspond donc au cumul des angles précités β_{INT} et β_{EXT}, est prévu aigu, en étant compris de préférence entre 45° et 55° : ce dimensionnement permet, à la fois, de donner au sommet 25S une bonne acuité d'arête pour pénétrer les aliments durs et réaliser ainsi la fonction de pic à glace permettant de faire éclater de tels aliments durs, et de donner au reste de la dent 25 une section transversale suffisamment grande pour lui garantir une bonne résistance, notamment une faible usure.

Suivant une forme de réalisation pratique et efficace, qui est compatible avec les aspects techniques décrits ci-dessus pour chaque dent 25 et qui est d'ailleurs mise en oeuvre dans l'exemple de réalisation considéré sur les figures 3 à 6, les dents 25 sont réparties le long du bord de fuite 23B, et ce de manière régulière, dans le sens où l'espacement, noté e sur la figure 4, entre les sommets respectifs 25S de deux dents successives est sensiblement constant.

Suivant encore un autre aspect avantageux, également mis en oeuvre dans l'exemple de réalisation considéré ici, les sommets 25S des dents 25 sont répartis autour de l'axe Z-Z, ce qui revient à dire qu'ils occupent des positions angulaires respectives différentes autour de l'axe Z-Z. Avantageusement, les sommets 25S sont ainsi répartis autour de l'axe Z-Z de manière régulière lorsqu'on parcourt le bord de fuite 23B en s'éloignant du corps 21 de la lame 20, dans le sens où le secteur angulaire, noté α sur la figure 4, qui est centré sur l'axe Z-Z et qui s'étend entre les sommets respectifs 25S de deux dents successives 25B, est sensiblement constant. Ce non-alignement radial des sommets 25S évite que deux des dents 25 travaillent en même temps, c'est-à-dire qu'elles entrent simultanément en contact avec un aliment dur à fragmenter. Suivant une disposition pratique, la dent 25 la plus proche de l'axe Z-Z est agencée en avant, par rapport au sens secondaire S2, des autres dents 25, c'est-à-dire que ces autres dents 25 sont agencées en arrière, dans le sens secondaire S2, du rayon R passant par l'axe Z-Z et le sommet 25S de la dent 25 la plus proche de l'axe Z-Z : de cette façon, la dent la plus proche de l'axe Z-Z est utilisée de manière privilégiée lors de l'entraînement de la lame 20 dans le sens secondaire S2, en appliquant aux aliments durs à fragmenter davantage d'efforts de fragmentation que les autres dents, qui sont plus éloignées de l'axe Z-Z.

Bien entendu, le moteur 31 du blender 1 est conçu pour entraîner en rotation autour de l'axe Z-Z la lame 20 non seulement dans le sens principal S1, mais également dans le sens secondaire S2, le sens de rotation effectif étant sélectivement imposé par le socle 30. Une telle capacité du moteur 31 à entraîner la lame 20 en rotation sélectivement dans le sens S1 et dans le sens S2 passe par des aménagements spécifiques de ce moteur.

Une possibilité préférentielle consiste à ce que le moteur 31 soit à sens de rotation réversible, en particulier sous la forme d'un moteur électrique réversible. Une mise en oeuvre, pratique et performante, consiste en un moteur sans balais, couramment appelé moteur « brushless ». Un tel moteur « brushless » a pour principaux avantages d'être économe en énergie, du fait de son bon rendement, de chauffer peu et d'être à la fois particulièrement robuste tout en étant silencieux, du fait de l'absence de contact électrique tournant.

Une possibilité alternative consiste à associer au moteur 31 un mécanisme d'inversion du sens de rotation de sa sortie. Dans ce cas, les moyens d'entraînement de la lame 20 incluent à la fois le moteur 31, qui est alors simplement à sens de rotation unique, et le mécanisme d'inversion précité, en interposant ce dernier entre le moteur et le mécanisme de transmission 40 : grâce à ce mécanisme d'inversion, le sens de rotation effectif transmis à la lame est sélectionné entre le sens principal S1 et le sens secondaire S2.

Dans tous les cas, on comprend que les moyens motorisés du blender 1 intègrent des aménagements électromécaniques ou mécaniques, permettant que sa sortie motrice entraîne la lame 20 en rotation sélectivement dans le sens principal S1 et dans le sens secondaire S2.

En pratique, ces moyens motorisés sont commandés, par des moyens ad hoc, en ce qui concerne le sens de rotation effectif de la sortie motrice. Bien entendu, la forme de réalisation de ces moyens de commande est adaptée à la forme de réalisation du moteur 31. Dans l'exemple de réalisation considéré ici, ces moyens de commande se présentent sous la forme d'un panneau de commande 50 porté par le carter 31 du socle 30, comme montré sur la figure 1. De manière non représentée en détail, ce panneau 50 inclut, par exemple, un organe, de type manette, bouton ou similaire, que l'utilisateur sollicite manuellement pour commander aux moyens motorisés du blender 1 d'entraîner la lame 20 en rotation dans le sens secondaire S2.

La forme de réalisation qui vient d'être décrite pour les moyens de commande précités n'est pas limitative de l'invention, dans le sens où il ne s'agit que d'un exemple permettant de comprendre une mise en oeuvre possible de la commande des moyens motorisés du blender 1. Des exemples plus sophistiqués peuvent être envisagés. Ainsi, un exemple repose sur la capacité du panneau de commande 50 à intégrer, typiquement par l'intermédiaire de composants électroniques, un ou plusieurs programmes de pilotage des moyens motorisés en ce qui concerne non seulement le sens, mais également la vitesse voire l'accélération de la sortie motrice entraînant en rotation la lame 20 : un tel programme inclut une succession d'instructions de pilotage de la sortie motrice, le programme effectivement mis en oeuvre étant choisi par l'utilisateur, via une interface dédiée du panneau de commande 50. Un autre exemple repose sur la détection, électronique ou électromécanique, d'une trop forte résistance à la rotation de la lame 20 autour de l'axe Z-Z dans le sens principal S1 : lorsque cette résistance franchit un seuil préfixé, une unité ad hoc des moyens de commande fait inverser le sens de rotation de la lame 20.

Un exemple d'utilisation du blender 1 va maintenant être décrit, plus spécifiquement en lien avec la figure 2.

Dans cet exemple d'utilisation, on considère que des aliments à traiter sont placés dans le récipient 11 du bol 10, ces aliments incluant, voire consistant en des glaçons, référencés G sur la figure 2, étant remarqué que les autres aliments potentiellement présents ne sont pas représentés sur la figure 2 pour des raisons de visibilité.

Par mise en rotation de la lame 20 dans le sens principal S1, le bord d'attaque 23A de chaque aile 23 frappe les glaçons G, sans toutefois pouvoir réellement couper ces glaçons, du fait de leur dureté intrinsèque. Les bords d'attaque 23A ont ainsi plutôt tendance à pousser les glaçons G dans le sens S1 à l'intérieur du volume libre V du récipient 11, avec le risque d'amener au moins certains de ces glaçons G dans la configuration montrée à la figure 2 : un groupe de glaçons G forme, conjointement, une barre rigide de blocage en rotation dans le sens S1 de la lame 20, en prenant appui contre la paroi latérale 14 du récipient 11. L'apparition d'une telle configuration de blocage peut d'ailleurs être accentuée par la présence, sur la face intérieure de la paroi latérale 14 et/ou de la paroi de fond 13, de chicanes ou de nervures, telles que celles référencées 15 sur la figure 2. On comprend que l'action de la lame 20 sur les glaçons G dans le sens de rotation S1 est sensiblement inefficace, voire risque de conduire à un disfonctionnement ou un endommagement du blender 1, notamment de son bol 10 et/ou de son socle motorisé 30.

Alors que le blender 1 est dans la configuration montrée sur la figure 2, la mise en rotation de la lame 20 dans le sens secondaire S2 permet à la lame 20 d'agir sur les glaçons G par ses bords de fuite 23B : les dents 25 de ces bords de fuite 23B sont alors à même de fragmenter les glaçons G, ce que les biseaux 24 des bords d'attaque 23A n'étaient pas ou que peu à même de réaliser dans le sens de rotation S1, comme expliqué ci-dessus. La mise en rotation de la lame 20 dans le sens secondaire S2 est commandée par le panneau 50, moyennant, par exemple, une sollicitation manuelle spécifique de l'utilisateur. Cette commande peut, en variante, résulter de la détection du franchissement d'un seuil préfixé de résistance à la rotation de la lame 20 dans le sens principal S1, le cas échéant doublée d'une validation de contrôle par l'utilisateur.

L'exemple d'utilisation qui vient d'être décrit permet de comprendre que lorsque les aliments à traiter par le blender 1 contiennent des glaçons G, l'utilisateur peut, le cas échéant, lancer un programme de pilotage de la lame 20, incluant une ou plusieurs instructions dédiées à la mise en rotation de la lame 20 dans le sens secondaire S2.

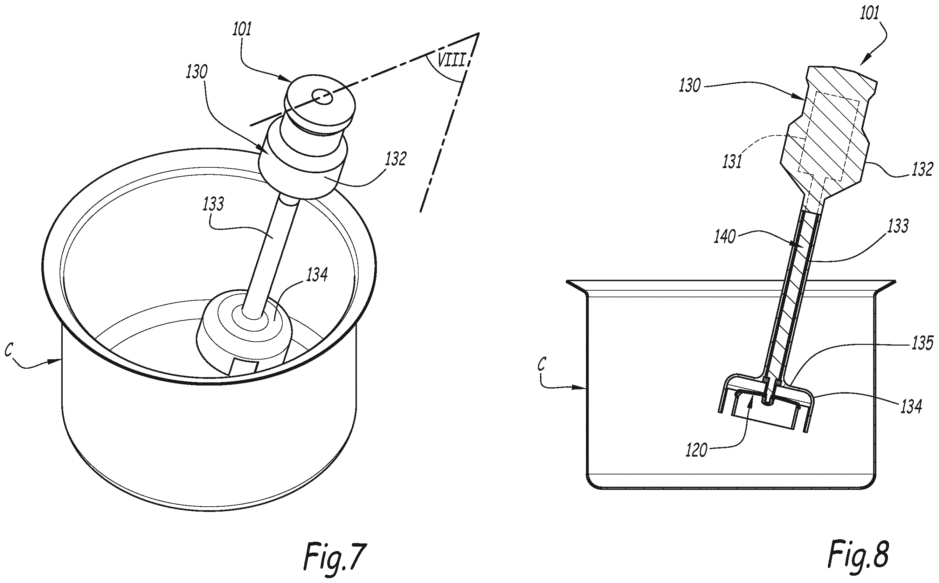

Sur les figures 7 et 8 est représenté un batteur portatif 101, autrement appelé mixeur-plongeant ou mixeur-plongeur. Ce batteur portatif 101 répond par exemple à la norme européenne EN 12853.

Le batteur portatif 101 présente une forme globale allongée, définissant un axe géométrique central Z-Z. A son extrémité axiale destinée à être tournée vers le haut en service, le batteur portatif 101 comporte une tête de préhension 130 par laquelle un utilisateur tient à la main le batteur portatif.

Comme indiqué de manière schématique sur la figure 8, la tête de préhension 130 intègre intérieurement un moteur 131, notamment un moteur électrique, agencé à l'intérieur d'un carter 132 de la tête de préhension 130. En direction de l'extrémité axiale du batteur portatif 101 tournée vers le bas en service, le carter 132 est prolongé par un tube 133 se terminant, à l'extrémité précitée du batteur portatif, par une cloche 134. Dans l'exemple de réalisation considéré sur les figures 6 et 7, cette cloche 134 est ajourée en plusieurs portions de sa périphérie.

Comme représenté sur la figure 8, le batteur portatif 101 comporte également une lame 120 qui est disposée à l'intérieur de la cloche 134 et qui est montée rotative, autour de l'axe Z-Z, sur la paroi de fond 135 de la cloche 134, cette paroi de fond 135 formant ainsi, pour la lame 120, un support fixe du batteur portatif 101. Cette lame 120 est fonctionnellement, voir structurellement, identique à la lame 20 du blender 1.

Egalement comme représenté sur la figure 8, le corps de la lame 120, traversé par l'axe Z-Z, est en prise mécanique avec un mécanisme de transmission 140, agencé le long et à l'intérieur du tube 133 de manière à accoupler en rotation, autour de l'axe Z-Z, la lame 20 à la sortie motrice du moteur 131.

Suivant des considérations similaires à celles développées plus haut concernant la lame 20, le moteur 31 et le panneau de commande 50 du blender 1, le moteur 131 du batteur portatif 101 est prévu pour entrainer la lame 120 en rotation autour de l'axe Z-Z sélectivement dans les deux sens opposés, le sens de rotation effectif étant commandé par l'utilisateur par l'intermédiaire de moyens de commande ad hoc, non représentés sur les figures 7 et 8 et par exemple portés par le carter 132 de la tête de préhension 130.

En utilisation, le batteur portatif 101 est manipulé de sorte que sa cloche 134 soit plongée à l'intérieur d'un récipient C, en pratique un récipient de cuisine tel qu'une casserole ou une marmite, ce récipient contenant des aliments à mélanger, à liquéfier et/ou à réduire en purée. Suivant les mêmes considérations que celles explicitées plus haut concernant l'utilisation de la lame 20 du blender 1, on comprend que la lame 120 du batteur portatif 101 interagit différemment sur les aliments contenus dans le récipient C selon que cette lame est entrainée dans l'un ou l'autre des deux sens de rotation possible.

Les descriptions respectives du blender 1 et du batteur portatif 101 illustrent la variété d'applications possibles à l'invention, les divers appareils conformes à l'invention pouvant être appelés, de manière générale, des mélangeurs pour aliments. Bien entendu, d'autres exemples de tels mélangeurs peuvent être envisagés. C'est ainsi le cas pour les robots-mixeurs. C'est également le cas pour les cutters, autrement appelés préparateurs culinaires et tels que répondant par exemple à la norme européenne EN 128552. Ces cutters sont couramment utilisés en restauration collective ou en laboratoire de préparation alimentaire et comprennent une large cuve, généralement à fond plat, dont la paroi de fond porte, de manière rotative autour d'un axe vertical, une ou plusieurs lames qui sont généralement aussi larges que la cuve, ces lames étant souvent prévues en deux exemplaires de sorte qu'une lame balaye le fond de la cuve tandis que l'autre lame balaye une zone située à quelques centimètre au-dessus de la paroi de fond : à la différence de la lame 20 du blender 1 considéré plus haut, les lames d'un tel cutter ne sont généralement pas vrillées pour ne pas faire circuler les aliments de haut en bas. En prévoyant que chaque lame d'un tel cutter présente, pour chacune de ses ailes, des bords d'attaque et de fuite respectivement similaires aux bords d'attaque 23A et de fuite 23B de chaque aile 23 de la lame 20, l'entrainement rotatif des lames du cutter dans un sens similaire au sens secondaire S2 permet de fragmenter ou de concasser des aliments durs, tels que des morceaux d'aliments congelés, avant d'entrainer en rotation ces lames du cutter dans un sens similaire au sens principal S1 pour affiner, par coupe, la subdivision des aliments.

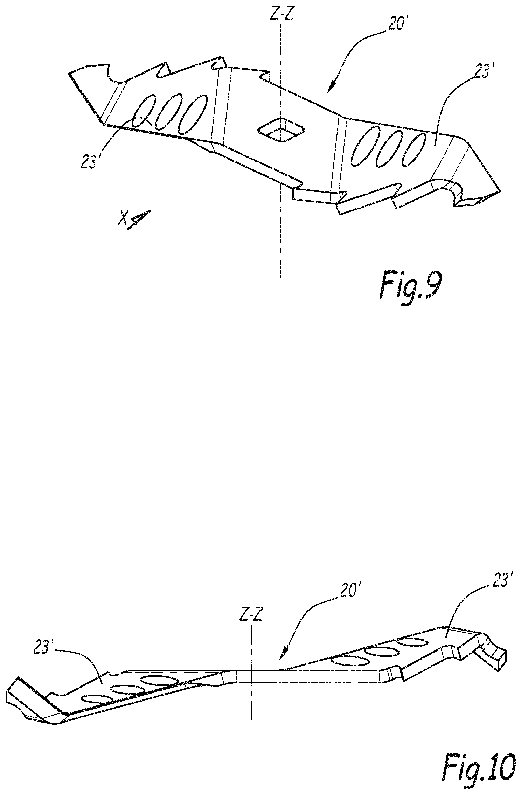

Divers aménagements et variantes aux mélangeurs tels que le blender 1, le batteur portatif 101 et le cutter décrits jusqu'ici sont par ailleurs envisageables. A titre d'exemples :
- sur le support fixe du mélangeur, formé par la paroi de fond 13 du bol 10 pour le blender 1 ou par la paroi de fond 135 de la cloche 134 pour le batteur portatif 101, la lame 20 ou 120 peut être montée de manière rotative aussi bien à demeure que de façon amovible ; en particulier, pour le cutter évoqué plus haut, les lames sont préférentiellement prévues amovibles vis-à-vis de la cuve de réception des aliments à mélanger ;
- comme évoqué plus haut, et à la différence des ailes 23 de la lame 20, les ailes de la lame 20 ou 120 peuvent ne pas être symétriques l'une de l'autre par rapport à l'axe Z-Z ; ainsi, dans l'exemple illustré par les figures 9 et 10, les ailes 23' d'une lame 20' s'étendent respectivement de part et d'autre d'un plan géométrique dans lequel s'étend le corps central de la lame, traversé par l'axe Z-Z ; et/ou
- également comme évoqué plus haut, plusieurs lames peuvent être prévues au sein d'un même mélangeur, comme c'est par exemple le cas pour le cutter précité ; par ailleurs, le nombre d'ailes pour chaque lame n'est pas limité à deux, une seule aile ou, au contraire, trois ailes ou plus pouvant être prévues.

## Revendications

1. Mélangeur (1 ; 101) pour aliments, comprenant :
- au moins une lame (20 ; 20' ; 120), qui est montée à rotation autour d'un axe (Z-Z) sur un support fixe (13 ; 135) du mélangeur et qui inclut à la fois un corps (21), traversé par l'axe, et au moins une aile (23 ; 23') s'étendant depuis le corps, la ou chaque aile ayant :
- un bord d'attaque (23A) qui est pourvu d'un biseau de coupe (24) conformé pour couper les aliments contenus dans un récipient (11 ; C) lorsque la lame est entraînée en rotation autour de l'axe dans un sens principal (S1), et
- un bord de fuite (23B) qui est opposé au bord d'attaque suivant une direction périphérique à l'axe ; et
- des moyens motorisés (31 ; 131) conçus pour entraîner, par rapport au support, la lame en rotation autour de l'axe sélectivement dans le sens principal (S1) et dans un sens secondaire (S2) qui est opposé au sens principal,
**caractérisé en ce que** le bord de fuite (23B) de la ou chaque aile (23) de la lame (20 ; 20' ; 120) est pourvu d'au moins une dent de fragmentation (25), qui est conformée pour fragmenter à la façon d'un pic à glace les aliments contenus dans le récipient (11 ; C) lorsque la lame est entraînée en rotation autour de l'axe dans le sens secondaire (S2) en présentant un sommet (25S) pointu, qui est formé à la jonction anguleuse entre un bord intérieur (25A) de la dent de fragmentation, qui est tourné vers l'axe (Z-Z), et un bord extérieur (25B) de la dent de fragmentation, qui est tourné à l'opposé de l'axe (Z-Z).

2. Mélangeur suivant la revendication 1, **caractérisé en ce que** plusieurs dents de fragmentation (25) sont réparties le long du bord de fuite (23B).

3. Mélangeur suivant la revendication 2, **caractérisé en ce que** les dents de fragmentation (25) sont réparties le long du bord de fuite (23B) de manière régulière.

4. Mélangeur suivant l'une quelconque des revendications précédentes, **caractérisé en ce que** le bord intérieur (25A) et le bord extérieur (25B) de la ou chaque dent de fragmentation (25) sont disposés de part et d'autre d'une droite géométrique (T) qui est tangente, au niveau du sommet (25S) de la dent de fragmentation, au cercle centré sur l'axe (Z-Z) et passant par ce sommet, en étant tous les deux agencés en arrière, par rapport au sens secondaire (S2) d'un rayon (R) passant par l'axe (Z-Z) et le sommet de la dent de fragmentation.

5. Mélangeur suivant la revendication 4, **caractérisé en ce que**, au sommet (25S) de la ou chaque dent de fragmentation (25), les bords intérieur (25A) et extérieur (25B) forment entre eux un angle (β) aigu.

6. Mélangeur suivant la revendication 5, **caractérisé en ce que** ledit angle (β) est compris entre 45° et 55°.

7. Mélangeur suivant l'une quelconque des revendications 2 à 6, **caractérisé en ce que** les sommets respectifs (25S) des dents de fragmentation (25) sont repartis autour de l'axe (Z-Z).

8. Mélangeur suivant la revendication 7, **caractérisé en ce que** les sommets respectifs (25S) des dents de fragmentation (25) sont repartis autour de l'axe (Z-Z) de manière régulière lorsqu'on parcourt le bord de fuite (23B) en s'éloignant du corps (21) de la lame (20).

9. Mélangeur suivant l'une des revendications 7 ou 8, **caractérisé en ce que** parmi les dents de fragmentation (25), une première dent, qui est la plus proche de l'axe (Z-Z), est agencée en avant, par rapport au sens secondaire (S2), des autres dents.

10. Mélangeur suivant l'une quelconque des revendications précédentes, **caractérisé en ce que** les moyens motorisés (31 ; 131) comprennent un moteur électrique sans balais.

11. Mélangeur suivant l'une quelconque des revendications précédentes, **caractérisé en ce que** le mélangeur (1) comprend en outre un bol (10) ou une cuve, qui constitue au moins en partie le récipient (11) contenant les aliments et dont une paroi de fond (13) constitue au moins en partie le support sur lequel la lame (20 ; 20') est montée.

12. Mélangeur suivant l'une quelconque des revendications précédentes, **caractérisé en ce que** le mélangeur est un blender (1).

13. Mélangeur suivant l'une quelconque des revendications 1 à 11, **caractérisé en ce que** le mélangeur est un batteur portatif (101).

14. Mélangeur suivant l'une quelconque des revendications précédentes, **caractérisé en ce que** le mélangeur (1) comporte en outre des moyens de commande (50) qui sont adaptés pour commander les moyens motorisés (31), de sorte que ces derniers entraînent la lame (20) en rotation autour de l'axe (Z-Z) dans le sens secondaire (S2), en fonction :
- d'une sollicitation spécifique de l'utilisateur sur ces moyens de commande,
- d'une instruction dédiée d'au moins un programme intégré aux moyens de commande, et/ou
- du franchissement d'un seuil préfixé de résistance à la rotation de la lame autour de l'axe (Z-Z) dans le sens principal (S1).

## Patentansprüche

1. Mixer (1; 101) für Nahrungsmittel, Folgendes aufweisend:
- mindestens eine Klinge (20; 20'; 120), die drehbeweglich um eine Achse (Z-Z) an einem feststehenden Träger (13; 135) des Mixers angebracht ist, und die zugleich einen von der Achse durchquerten Körper (21) und mindestens einen Flügel (23; 23') aufweist, der sich ausgehend vom Körper erstreckt, wobei der oder jeder Flügel verfügt über:
- einen vorderen Rand (23A), der mit einer Schnittkante (24) versehen ist, die zum Schneiden der in einem Behälter (11; C) enthaltenen Nahrungsmittel, wenn die Klinge um die Achse in einer Hauptrichtung (S1) drehend angetrieben wird, ausgebildet ist, und
- einen hinteren Rand (23B), der dem Vorderrand entlang einer Umfangsrichtung der Achse entgegengesetzt ist; und
- Motoreinrichtungen (31; 131), die dazu konzipiert sind, die Klinge in Bezug auf die Halterung selektiv in der Hauptrichtung (S1) und in einer zweiten Richtung (S2), die zur Hauptrichtung entgegengesetzt ist, um die Achse drehend anzutreiben,
**dadurch gekennzeichnet, dass** der hintere Rand (23B) des oder jedes Flügels (23) der Klinge (20; 20'; 120) mit mindestens einem Zerstückelungszahn (25) versehen ist, der dazu ausgebildet ist, die in dem Behälter (11; C) enthaltenen Nahrungsmittel auf die Art eines Eispickels zu zerstückeln, wenn die Klinge drehend um die Achse in der zweiten Richtung (S2) angetrieben wird und dabei einen zugespitzten Scheitelpunkt (25S) aufweist, der an der Winkelverbindung zwischen einem der Achse (Z-Z) zugewandten Innenrand (25A) des Zerstückelungszahns und einem von der Achse (Z-Z) abgewandten Außenrand (25B) des Zerstückelungszahns ausgebildet ist.

2. Mixer nach Anspruch 1, **dadurch gekennzeichnet, dass** mehrere Zerstückelungszähne (25) entlang des hinteren Rands (23B) verteilt sind.

3. Mixer nach Anspruch 2, **dadurch gekennzeichnet, dass** die Zerstückelungszähne (25) auf gleichmäßige Weise entlang des hinteren Rands (23B) verteilt sind.

4. Mixer nach einem der vorhergehenden Ansprüche, **dadurch gekennzeichnet, dass** der Innenrand (25A) und der Außenrand (25B) des oder jedes Zerstückelungszahns (25) beidseits einer geometrischen Geraden (T) angeordnet sind, die im Bereich des Scheitelpunkts (25S) des Zerstückelungszahns tangential zu dem auf die Achse (Z-Z) zentrierten Kreis ist und durch diesen Scheitelpunkt verläuft, wobei beide in Bezug auf die zweite Richtung (S2) hinter einem Radius (R) angeordnet sind, der durch die Achse (Z-Z) und den Scheitelpunkt des Zerstückelungszahns verläuft.

5. Mixer nach Anspruch 4, **dadurch gekennzeichnet, dass** am Scheitelpunkt (25S) des oder jedes Zerstückelungszahns (25) der Innenrand (25A) und der Außenrand (25B) zwischen sich einen spitzen Winkel (β) bilden.

6. Mixer nach Anspruch 5, **dadurch gekennzeichnet, dass** der Winkel (β) zwischen 45° und 55° beträgt.

7. Mixer nach einem der Ansprüche 2 bis 6, **dadurch gekennzeichnet, dass** die jeweiligen Scheitelpunkte (25S) der Zerstückelungszähne (25) um die Achse (Z-Z) verteilt sind.

8. Mixer nach Anspruch 7, **dadurch gekennzeichnet, dass** die jeweiligen Scheitelpunkte (25S) der Zerstückelungszähne (25) beim Durchlaufen des hinteren Rands (23B) und sich Entfernen vom Körper (21) der Klinge (20) auf gleichmäßige Weise um die Achse (Z-Z) verteilt sind.

9. Mixer nach einem der Ansprüche 7 oder 8, **dadurch gekennzeichnet, dass** von den Zerstückelungszähnen (25) ein erster Zahn, welcher der Achse (Z-Z) am nächsten ist, in Bezug auf die zweite Richtung (S2) vor den anderen Zähnen angeordnet ist.

10. Mixer nach einem der vorhergehenden Ansprüche, **dadurch gekennzeichnet, dass** die Motoreinrichtungen (31; 131) einen bürstenlosen Elektromotor aufweisen.

11. Mixer nach einem der vorhergehenden Ansprüche, **dadurch gekennzeichnet, dass** der Mixer (1) darüber hinaus eine Schale (10) oder eine Schüssel aufweist, die zumindest zum Teil den die Nahrungsmittel enthaltenden Behälter (11) bildet, und von der eine Grundwand (13) zumindest zum Teil die Halterung bildet, an der die Klinge (20; 20') angebracht ist.

12. Mixer nach einem der vorhergehenden Ansprüche, **dadurch gekennzeichnet, dass** der Mixer ein Standmixer (1) ist.

13. Mixer nach einem der Ansprüche 1 bis 11, **dadurch gekennzeichnet, dass** der Mixer ein tragbares Rührgerät (101) ist.

14. Mixer nach einem der vorhergehenden Ansprüche, **dadurch gekennzeichnet, dass** der Mixer (1) darüber hinaus Steuereinrichtungen (50) aufweist, die dazu angepasst sind, die Motoreinrichtungen (31) so zu steuern, dass diese die Klinge (20) um die Achse (Z-Z) in der zweiten Richtung (S2) drehend antreiben, und zwar in Abhängigkeit von:
- einer spezifischen Einflussnahme des Benutzers auf die Steuereinrichtungen,
- einer zweckgebundenen Anweisung mindestens eines in die Steuereinrichtungen integrierten Programms, und/oder
- dem Überschreiten eines festgelegten Schwellenwerts eines Drehwiderstands der Klinge um die Achse (Z-Z) in der Hauptrichtung (S1).

## Claims

1. Food mixer (1; 101), comprising
- at least one blade (20; 20'; 120) which is mounted so as to rotate about an axis (Z-Z) on a fixed support (13; 135) of the mixer and which includes both a body (21) through which the axis passes and at least one arm (23; 23') extending from the body, the or each arm having:
- a leading edge (23A) that is provided with a cutting bevel (24) formed to cut food contained in a container (11; C) when the blade is rotated about the axis in a principal direction (S1), and
- a trailing edge (23B) which is opposite the leading edge in a direction peripheral to the axis; and
- motorized means (31; 131) designed to rotate the blade relative to the support about the axis either in the principal direction (S1) or in a secondary direction (S2) opposite the principal direction,
**characterized in that** the trailing edge (23B) of the or each arm (23) of the blade (20; 20'; 120) is provided with at least one fragmentation tooth (25) which is designed to fragment, in the manner of an ice pick, the food contained in the container (11; C) when the blade is rotated about the axis in the secondary direction (S2), having a pointed peak (25S) that is formed at the angular junction between an inner edge (25A), oriented towards the axis (Z-Z), of the fragmentation tooth and an outer edge (25B), oriented away from the axis (Z-Z), of the fragmentation tooth.

2. Mixer according to Claim 1, **characterized in that** multiple fragmentation teeth (25) are distributed along the trailing edge (23B).

3. Mixer according to Claim 2, **characterized in that** the fragmentation teeth (25) are regularly distributed along the trailing edge (23B).

4. Mixer according to any one of the preceding claims, **characterized in that** the inner edge (25A) and the outer edge (25B) of the or each fragmentation tooth (25) are arranged on either side of a straight line (T) that is tangential, at the peak (25S) of the fragmentation tooth, to the circle centred on the axis (Z-Z) and passes through this peak, while both being arranged aft, with regard to the secondary direction (S2), of a radius (R) passing through the axis (Z-Z) and the peak of the fragmentation tooth.

5. Mixer according to Claim 4, **characterized in that**, at the peak (25S) of the or each fragmentation tooth (25), the inner edge (25A) and outer edge (25B) form between them an acute angle (β).

6. Mixer according to Claim 5, **characterized in that** said angle (β) is between 45° and 55°.

7. Mixer according to any one of Claims 2 to 6, **characterized in that** the respective peaks (25S) of the fragmentation teeth (25) are distributed about the axis (Z-Z).

8. Mixer according to Claim 7, **characterized in that** the respective peaks (25S) of the fragmentation teeth (25) are distributed about the axis (Z-Z) in regular fashion when passing along the trailing edge (23B) with increasing distance from the body (21) of the blade (20).

9. Mixer according to either of Claims 7 and 8, **characterized in that**, among the fragmentation teeth (25), a first tooth that is closest to the axis (Z-Z) is arranged forward, with regard to the secondary direction (S2), of the other teeth.

10. Mixer according to any one of the preceding claims, **characterized in that** the motorized means (31; 131) comprise a brushless electric motor.

11. Mixer according to any one of the preceding claims, **characterized in that** the mixer (1) further comprises a bowl (10) or a tank which constitutes at least part of the container (11) containing the food and of which a bottom wall (13) forms at least part of the support on which the blade (20; 20') is mounted.

12. Mixer according to any one of the preceding claims, **characterized in that** the mixer is a blender (1).

13. Mixer according to any one of Claims 1 to 11, **characterized in that** the mixer is a portable beater (101).

14. Mixer according to any one of the preceding claims, **characterized in that** the mixer (1) further comprises control means (50) that are suitable for controlling the motorized means (31) such that the latter rotate the blade (20) about the axis (Z-Z) in the secondary direction (S2) in response to:
- a specific action of the user on these control means,
- a dedicated instruction from at least one integrated programme of the control means, and/or
- a prefixed threshold of resistance to rotation of the blade about the axis (Z-Z) in the principal direction (S1) being exceeded.
